# FASCICULE DE BREVET EUROPEEN

(11) **EP 1 673 742 B1**
(45) Date de publication et mention de la délivrance du brevet: **11.04.2007**
(21) Numéro de dépôt: 03780224.6
(22) Date de dépôt: 15.10.2003
(51) Int. Cl.: G07F 7/08

(54) **SYSTEME DE CARTE A PUCES SECURISE UTILISABLE COMME PORTE-MONNAIE ELECTRONIQUE**
GESICHERTES UND ALS ELEKTRONISCHE GELDBÖRSE VERWENDBARES CHIPKARTENSYSTEM
SECURE SMART CARD SYSTEM FOR USE AS ELECTRONIC WALLET

(43) Date de publication de la demande: 28.06.2006
(73) Titulaire: Parienti, Raoul, 06000 Nice (FR)
(72) Inventeur: Parienti, Raoul, 06000 Nice (FR)
(86) Numéro de dépôt international: PCT/FR2003/003027
(87) Numéro de publication internationale: WO 2004/036511

(56) Documents cités:
- EP-A- 0 402 182
- DE-U- 29 504 542
- GB-A- 2 304 220
- US-A- 5 049 728

## Description

La présente invention concerne les systèmes de carte à puce et notamment les systèmes de paiement électronique permettant l'achat de produits par son possesseur grâce à une carte à puce sans faire appel à des transferts de monnaie fiduciaire et concerne plus particulièrement un système de carte à puce sécurisé servant notamment de porte-monnaie électronique.

Le système de carte bancaire permet déjà ce genre de transaction, mais il est réservé à des montants assez élevés, et nécessite la liaison directe avec un compte bancaire.

Différents systèmes de porte-monnaie électronique (PME) ont été mis au point, qui permettent le rechargement d'une certaine somme d'argent et des achats de produits ou services d'un montant inférieur ou égal à la somme d'argent disponible.

D'une manière générale, les porte-monnaie électroniques se présentent comme des cartes à puce classiques. Ils sont essentiellement rechargeables. Dans le cas des PME jetables, le module électronique est essentiellement constitué par une mémoire simple dont le contenu, représentant le solde disponible, est décrémenté à chaque utilisation du montant de la transaction effectuée et ceci jusqu'à épuisement du solde. Ce type de porte-monnaie électronique fonctionne exactement comme une carte téléphonique prépayée. Le PME rechargeable a une structure plus complexe puisqu'il comprend une mémoire réinscriptible dans laquelle est défini un fichier solde dont le contenu est, comme pour le PME jetable, décrémenté à chaque transaction, ou, au contraire, incrémenté du montant de la somme rechargée, toutes ces opérations s'effectuant sous le contrôle d'un micro-processeur et avec un degré de sécurisation inexistant dans les PME jetables.

Le système de gestion des PME rechargeables nécessite un système d'acquisition et de rechargement et un système permettant le contrôle de la circulation de la monnaie électronique et donc une nouvelle architecture par rapport au système CB déjà existant. En effet, le système de gestion du PME nécessite un système contrôlant à la fois l'émission à distance et l'acquisition de monnaie électronique. Tous ces systèmes de PME sont rechargés via des bornes et présentent un niveau de sécurité inférieur à une puce-argent matérielle.

Parmi les systèmes de porte-monnaie électronique connus à ce jour, le système décrit dans la demande de brevet européen EP 0 402 182 est un mécanisme souple dans lequel la carte à puces à la disposition de l'utilisateur comprend une puce permanente et une puce amovible dont la mémoire contient le montant du crédit autorisé, ce crédit étant décrémenté à chaque transaction, la carte étant logée dans un boîtier prévu à cet effet.

Toutefois, du fait que la mémoire de la puce amovible peut être modifiée (elle l'est à chaque transaction), elle présente par ses accès multiple à la mémoire, une fragilité sécuritaire plus grande que celle offerte par une puce à lecture unique.

En outre, un système dans lequel la puce amovible n'est pas soumise à un organisme central de contrôle fait courir le risque d'une variation incontrôlable de la masse monétaire par création de monnaie électronique.

C'est pourquoi le but de l'invention est de fournir un système de carte à puces pouvant servir de porte-monnaie électronique du type comportant un module permanent et un module amovible dans lequel il n'est pas possible de modifier le montant de crédit contenu dans le module amovible qui est par ailleurs sous le contrôle de la banque centrale.

L'invention concerne donc un système de carte à puce sécurisé comprenant essentiellement une carte sur laquelle est monté un premier module constitué d'un microprocesseur et d'une mémoire programmable sécurisée, et un deuxième module jetable comportant essentiellement une mémoire à lecture unique contenant un montant de crédit prédéterminé à la disposition de l'utilisateur, la mémoire à lecture unique étant pourvue de contacts externes destinés à coopérer avec des contacts correspondants d'un boîtier dans lequel la carte a été insérée. Le boîtier comprend des moyens de communication pour communiquer avec un terminal extérieur destiné à enregistrer une transaction et des moyens de connexion pour connecter les premier et deuxième modules entre eux de manière à décrémenter la mémoire programmable sécurisée du montant de la transaction. La mémoire à lecture unique du deuxième module contient, outre le montant de crédit prédéterminé, un numéro de série unique attribué par la banque centrale à l'instar d'un billet de banque, le montant de crédit et le numéro unique étant enregistrés dans la mémoire programmable sécurisée par les moyens de communication lorsque la carte est insérée pour la première fois dans le boîtier.

Les buts, objets et caractéristiques de l'invention apparaîtront plus clairement à la lecture de la description qui suit faite en référence aux dessins dans lesquels :
- la figure 1 représente schématiquement la carte bi-puce selon l'invention munie de la puce permanente et de la puce amovible,
- la figure 2 représente schématiquement un mode de réalisation pour l'insertion de la puce amovible dans la carte bi-puce,
- la figure 3 représente schématiquement une variante de réalisation de la carte bi-puce selon l'invention,
- la figure 4 représente schématiquement un micro-boîtier dans lequel une carte bi-puce selon l'invention a été insérée,
- la figure 5 est un bloc-diagramme du système de paiement d'une transaction à l'aide du micro-boîtier dans lequel une carte bi-puce selon l'invention a été insérée illustré sur la figure 4, et
- la figure 6 est un organigramme représentant les étapes d'une transaction effectuée avec le système de carte bi-puce selon l'invention.

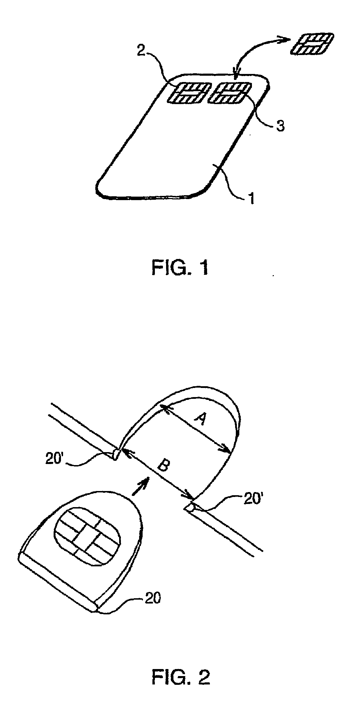

La carte à puces selon l'invention aussi appelée carte bi-puce par la suite est représentée sur la figure 1. La carte 1 comprend une puce permanente programmable 2 et une puce amovible jetable renouvelable qui correspond à un crédit prédéterminé (par ex 100 euros).

De façon générale, la puce amovible est placée dans un évidement de la carte 1 par enclipsage. Selon le mode de réalisation représenté sur la figure 2, un évidement permet l'introduction de la carte par glissement grâce à des guides mâles 20 réalisés sur la puce et femelles 20' réalisés sur la carte à puces 1. La largeur externe de l'évidement B est légèrement inférieure à la largeur de l'évidement interne A, ce qui permet à la carte 1 de maintenir fermement la puce amovible par pression élastique.

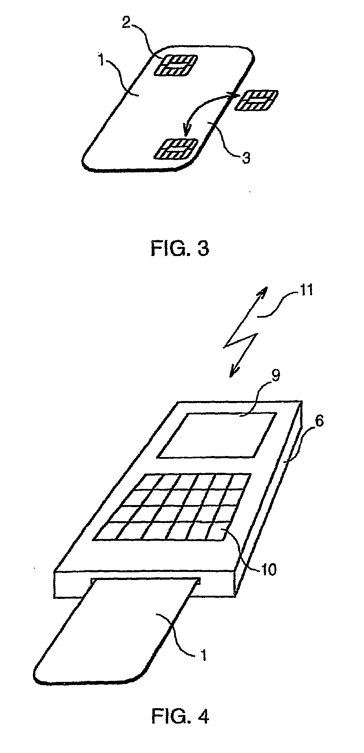

Dans un mode de réalisation représenté sur la figure 3 qui permet la lecture par contact de cette carte bi-puce par tout lecteur déjà implanté, la puce amovible 3 est positionnée selon une symétrie centrale par rapport à la puce permanente 2 afin de permettre la lecture successive d'une puce puis de l'autre, par introduction, retrait, rotation, et réintroduction de la carte à puces 1 dans ledit lecteur qui se substitue ainsi au micro-boîtier selon l'invention pour permettre la communication entre les deux puces 2 et 3.

En référence à la figure 4, la carte bi-puce s'insère dans un micro-boîtier 6 disposant d'un écran 9 et d'un clavier 10 qui comporte les touches « valider », « activer », « demande d'autorisation » et « transfert », ainsi que de moyens de communication 11 utilisant la radiofréquence, l'infrarouge ou tout autre moyen pour communiquer avec des moyens de connexion éloignés comme décrit ci-dessous.

La puce amovible comprend essentiellement une mémoire à lecture unique telle q'une EPROM qui contient un montant de crédit prédéterminé et un numéro de série unique. Elle est préférentiellement émise directement par la Banque Centrale, qui conserve ainsi son monopole d'émission de la monnaie, ou à défaut par une banque qui consigne une somme équivalente au montant des puces émises en cours d'utilisation, sous le contrôle de la banque centrale. Cette puce est en quelque sorte un véritable billet de banque numérique qui, en plus, a l'avantage d'être directement divisible, en gardant la trace de ces divisions. On l'obtient sans difficulté auprès des banques, à la Poste et dans tous lieux habilités à cet effet. A noter que, sur chaque puce amovible est gravé ou imprimé lisiblement tout ou partie du numéro de série de la puce, cette inscription pouvant également figurer sous forme de code à barres.

La puce permanente 2 est fixée sur la carte de préférence selon la norme ISO. Cette puce contient essentiellement un microprocesseur et un ensemble de mémoires hautement sécurisées et programmables (ROM, PROM et une mémoire réinscriptible EEPROM) pour mémoriser un code d'identification du possesseur, différents paramètres tels que profil, données catégorielles utiles au porteur (bénéfice de tarifs réduits, autorisations d'accès,...),. Les mémoires mortes mémorisent les logiciels de gestion des transactions et un ensemble d'algorithmes utiles pour permettre un niveau de sécurité optimum. Lesdites mémoires mortes mémorisent également d'autres algorithmes permettant d'autres fonctions décrites plus loin. La mémoire EEPROM est partitionnée, chaque partition étant dédiée à un usage précis. Les accès aux différentes partitions sont protégés par des codes confidentiels et /ou par des clés de cryptage, notamment l'accès à et la gestion de la mémoire (5) lors de toute transaction. La possibilité de disposer de plusieurs partitions permet à plusieurs prestataires tels que grande distribution, compagnie aérienne, d'adhérer au système et de charger des applications spécifiques et de pratiquer des politiques « marketing » ciblées « data mining ».

Lorsque la carte 1 pourvue d'une nouvelle puce amovible est insérée dans le micro-boîtier 6 pour la première fois, des moyens d'interconnexion contenus dans le micro-boîtier permettent la connexion entre la puce permanente et la puce amovible. Le microprocesseur de la puce permanente provoque alors le transfert du montant prédéterminé et du numéro de série unique contenus dans la mémoire à lecture unique de la puce amovible vers la mémoire sécurisée de la puce permanente grâce à des moyens d'interconnexion (non montrés) dont est pourvu le micro-boîtier 6.

Une fois que la somme d'argent intégrée dans la puce amovible a été transférée dans la mémoire sécurisée de la puce permanente, la puce amovible n'a plus aucune valeur et ne peut plus être utilisée par son possesseur. Néanmoins, le microprocesseur vérifiera séquentiellement et avant toute transaction que la puce amovible est toujours présente dans la carte bi-puce à des fins de sécurité.

L'électronique du micro-boîtier 6 permet d'une part de faire communiquer les puces 2 et 3 de la carte bi-puce entre elles comme on vient de le voir, mais également de gérer les échanges de données entre les moyens de communication (11) et des moyens de connexion extérieurs (12). Dans tous les cas, c'est le microprocesseur de la puce permanente qui contrôle les opérations d'échange de données via le micro-boîtier 6 entre la carte bi-puce et les moyens de connexion extérieurs.

Les autres fonctions du micro-boîtier sont d'assurer l'alimentation électrique de la carte bi-puce qui est pourvue de piles, et de permettre la lecture des puces 2 et 3, notamment à des fins de contrôle, d'information ou de sécurisation des transactions.

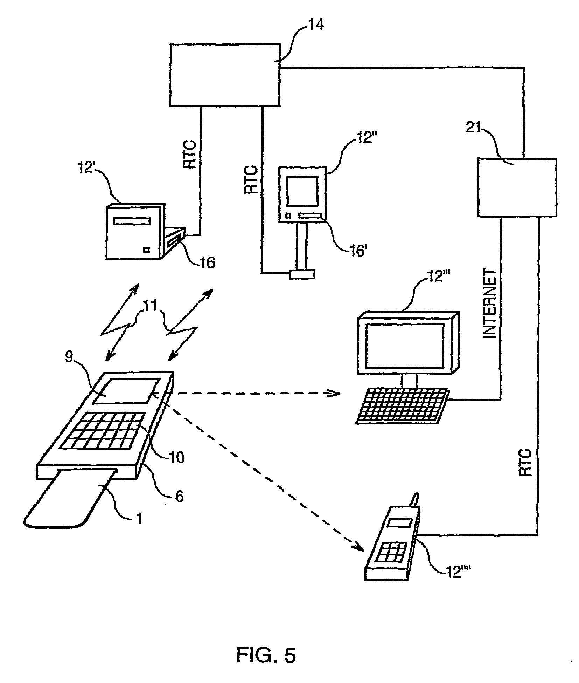

L'échange de données entre le micro-boîtier et une pluralité de moyens de connexion 12 est maintenant décrit en référence à la figure 5. Dans le cas le plus général, le moyen de connexion utilisé sera une borne 12'. Celle-ci est pourvue des moyens de communication sans contact permettant de coopérer avec les moyens de communication du micro-boîtier 6. Elle est également pourvue d'un lecteur de cartes à puce 16 permettant aussi les échanges avec contact. La borne 12' est située chez tout commerçant, prestataire de services, bus, parking, ..., et reçoit une succession de paiements et autre données. Les donnée échangées entre le micro-boîtier (6) et la borne (12') sont de quatre natures :
(a) les données de contrôle des échanges : reconnaissance mutuelle, anticollision si plusieurs micro-boîtiers émettent en même temps, cryptage, etc.. Ces données ont pour seul but de fiabiliser les échanges entre les micro-boîtiers 6 et les bornes 12',
(b) les données représentant le montant de chaque transaction, lesdits montants étant mémorisés dans une mémoire sécurisée de la borne 12',
(c) les données permettant la gestion des flux et la sécurité : suivi de la masse d'argent en circulation et données de sécurité contre la fraude,
(d) les données commerciales ou diverses : campagne de promotion pouvant être liée aux caractéristiques personnelles de l'utilisateur mémorisées dans une mémoire de la puce permanent, politique d'incitation et/ou de fidélisation, par exemple un pourcentage de certaines dépenses, achat ou service, peut être mémorisé dans un espace mémoire dédié de la puce permanente et devenir disponible pour l'utilisateur sous certaines conditions.

Régulièrement, par exemple chaque nuit, la borne 12' se connecte à un système informatique centralisé 14 pour transmettre les données (b), (c) et éventuellement (d) définies plus haut, lesquelles data, mémorisées dans une mémoire de masse adaptée, vont permettre de déterminer le montant des paiements de la journée et l'ensemble des données de sécurité et de contrôle. Le système informatique réalise ensuite une procédure qui a pour effet de traiter les données (b) afin de porter au crédit du compte associé à la borne 12' la montant des paiements de la journée, et de réaliser l'ensemble des contrôles, vérifications et statistiques utiles en traitant les donnée (c).

Le lecteur de carte à puce 16 de la borne 12' permet en cas de défaillance du micro-boîtier ou de piles usées, d'assurer les échanges par contact en introduisant la carte à puce 1 dans le lecteur 16. Selon un autre mode de réalisation de la borne 12', celle-ci peut être portative, à l'instar des terminaux de paiement électronique existants.

Un deuxième type de moyens de connexion 12" consiste en des bornes spécifiques disposées en des lieux spécialisés, par exemple dans les banques. Ces bornes se distinguent des précédentes car elles sont connectées en permanence au système informatique centralisé 14. Les bornes spécifiques 12 " permettent à l'utilisateur d'effectuer différentes transactions bancaires. Ces transactions ont été préalablement introduites via le clavier 10 du micro-boîtier 6 et enregistrées dans la mémoire de la puce permanente 2. Le microprocesseur de la puce permanente demande à l'utilisateur l'introduction d'un code confidentiel préétabli avant d'enregistrer les instructions définissant les transactions dans une mémoire de la puce 2. L'utilisateur peut alors transmettre les transactions préenregistrées (ou demandes de renseignements) grâce à la liaison sans contact autorisée par le micro-boîtier 6 ou en introduisant la carte 1 dans un lecteur 16' de la borne 12" . La borne 12"' peut également transmettre vers le micro-boîtier 6 toute donnée utile qui sera mémorisée dans la mémoire de la puce permanente 2.

Un troisième type de moyen de connexion extérieur consiste en un ordinateur personnel 12''' relié au réseau Internet, au réseau commuté, ou autres. la puce permanente 2 de la carte à puces mémorise dans sa mémoire EPROM des logiciels et un ou plusieurs algorithmes capables de délivrer un numéro d'autorisation associé à une transaction parfaitement définie. Ces logiciels et algorithmes sont également mémorisés dans le site marchand 21 du fournisseur de marchandises ou de services distants opérant par le réseau Internet. L'exemple suivant permettra de mieux comprendre
*Monsieur Pierre Martin souhaite acheter un objet via un site marchand sur le réseau Internet. Il se connecte sur le site choisi qui lui propose une liste de produits avec leurs prix respectifs. Monsieur Martin sélectionne le ou les arti cl es de son choix. Le si te marchand 21 affiche alors la liste des articles choisis et le prix à payer. Si Monsieur Martin est d'accord, il confirme sa commande. Le site marchand l'invite alors à donner ses coordonnées (nom, prénom, adresse) et le mode de règlement choisi.*
*Monsieur Martin disposant du micro-boîtier 6 dans lequel est insérée sa carte bi-puce personnelle selon l'Invention doit alors introduire via le clavier du micro-boîtier les paramètres de l'achat en cours et notamment le montant à payer et presser sur la touche : « Demande d'autorisation ».*
*L'algorithme mémorisé dans la mémoire EPROM de la puce permanente prend en considération tout ou partie des paramètres suivants: nom, prénom, adresse, date, montant à payer, numéro de la puce argent en cours. Si le microprocesseur détermine que la transaction est possible (crédit suffisant, conditions d'âge, ...), il détermine grâce à l'algorithme un numéro d'autorisation spécifique à la transaction en cours. Le numéro de série de la puce amovible et le numéro d'autorisation qui vient d'être calculé s'affichent alors sur l'écran 9 du micro-boîtier. Une fois ces éléments affichés, le montant de la transaction est immédiatement débitée dans la mémoire sécurisée de la puce permanente.*
*Monsieur Martin communique alors au site marchand via le clavier de son ordinateur 12"' les données affichées sur l'écran. L'informatique du site marchand 21 disposant des mêmes algorithmes, détermine à son tour un numéro d'autorisation et valide la cohérence avec celui qui vient d'être communiqué par l'acheteur, en fonction de quoi la commande est validée ou non, et la transaction financière enregistrée ou non.*

Une procédure analogue peut être réalisée à partir de tout téléphone 12 "" . Dans cette configuration, l'acheteur peut communiquer avec un robot par reconnaissance et synthèse de la parole ou via un opérateur humain. La validation de la transaction est alors réalisée par introduction sur la clavier téléphonique utilisant les fréquence vocales (DTMF), des éléments définis plus haut (numéro de série de la puce amovible et numéro de l'autorisation affichés sur l'écran 9 du micro-boîtier 6.

Lors de la première opération de paiement utilisant le crédit d'une nouvelle puce amovible 3, le numéro de série de la puce est automatiquement transmis vers la borne 12 avec un code « nouvelle puce n° x activée », en plus du montant de la transaction. Cette information est ensuite retransmise vers le système informatique central 14 qui gère le suivi des puces lors de la télé-collecte des bornes des commerçants.

De la même façon, chaque fois que la mémoire sécurisée de la puce permanente finit de consommer le montant de crédit reçu d'une puce amovible lors d'une opération de paiement, le numéro de série de la puce amovible en fin de vie est transmis vers la borne 12 avec un code « puce n° y épuisée » en plus du montant de la transaction, cette information remonte vers le système informatique central 14 comme il a été dit plus haut.

Ainsi l'organisme gestionnaire peut connaître avec précision et en temps quasi réel :
1/ l'ensemble des puces amovibles émises et distribuées et non initialisées (éventuellement thésaurisées),
2/ l'ensemble des puces amovibles émises et en cours d'utilisation,
3/ l'ensemble des puces amovibles épuisées.

Ces trois informations clés permettent de suivre avec précision les volumes de monnaie électronique émis, en cours, thésaurisés et épuisés. Toute tentative de création de fausse monnaie électronique est donc immédiatement détectée. Par conséquent, ce système présente une très forte dissuasion à la fraude. Ainsi, un lot de puces volées peut être mis en opposition immédiate par transmission aux bornes (12, 12',... ) d'une liste noire des numéros de série des puces volées.

Ce système permet donc aussi à la banque centrale de connaître parfaitement l'état de sa masse monétaire et/ou à la banque émettrice de gérer au mieux les sommes à consigner en contrepartie des puces qu'elle a émises.

Une variante de la procédure précédente consiste à communiquer systématiquement, à chaque transaction, le numéro de série de la puce amovible, ce qui permet un suivi plus fin, mais en contrepartie une gestion de données plus lourde.

### Les transactions

Chaque transaction entre le micro-boîtier du client et la « borne » du commerçant se déroule en 3 phases :
1. Le commerçant tape le prix sur son clavier. Ce prix s'inscrit simultanément sur le micro-boîtier du client.
2. Le client donne son accord en appuyant sur la touche « Validation » de son micro-boîtier.
3. La mémoire sécurisée de la puce permanente 2 qui a été préalablement chargée par une puce amovible 3 est alors débitée du montant de la transaction et la mémoire du commerçant est créditée du même montant.

Comme il a été dit plus haut, la carte à puces 1 peut effectuer les transactions à défaut de micro-boîtier et avec contact. Dans ce cas, le positionnement de la puce permanente est aux normes ISO, ce qui permet à la très grande majorité de lecteurs existants de traiter les transactions sans modification du matériel, mais à l'aide d'un logiciel d'application qui peut être télé-chargé au cours d'une connexion avec le système informatique centralisé 14.

### Dans le cas d'une lecture avec contact,

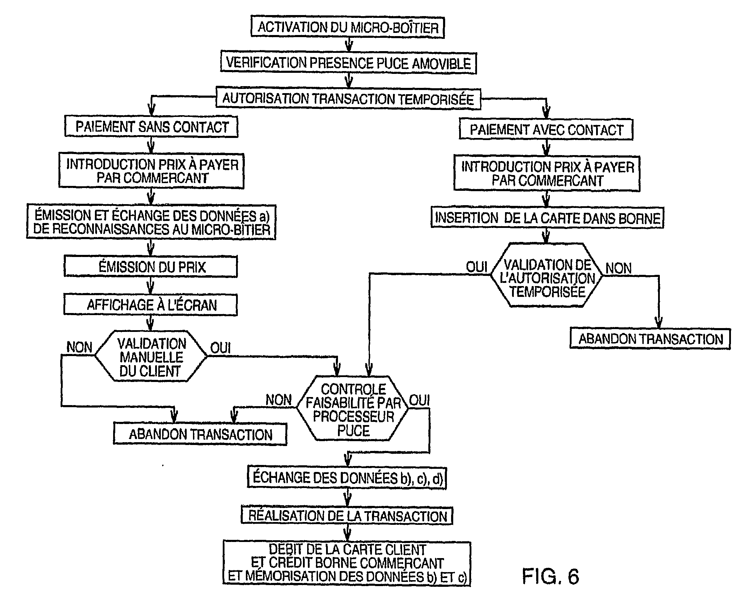

Les différentes étapes de la transaction sont décrites dans l'organigramme (représenté sur la figure 6
1/ Activation du micro-boîtier par une pression sur la touche « Activer » du micro-boîtier 6.
2/ Contrôle de la présence de la puce amovible par le microprocesseur de la puce permanente, et vérification que le numéro de série de cette dernière correspond à celui qui a permis le rechargement de la mémoire. Si le contrôle n'est pas positif, un message d'erreur s'affiche à l'écran 9 et l'électronique est inactivée.
3/ Si le contrôle est positif, le microprocesseur mémorise les paramètres du contrôle et notamment l'heure et le date dudit contrôle et donne une autorisation temporaire de transaction.

Si le paiement est réalisé sans contact :
5/ Le commerçant introduit le prix à payer sur le clavier d'une borne 12.
6/ La borne émet et échange des données a) avec le micro-boîtier dans le but d'une reconnaissance mutuelle.
7/ Le montant de la transaction est émis de la borne 12 vers le micro-boîtier 6.
8/ Ledit montant s'affiche à l'écran du micro-boîtier 6.
9/ Si le possesseur ne presse pas la touche « Valider », la transaction est abandonnée. Si, comme dans le cas général, il presse sur la touche « valider », alors,
10/ Le microprocesseur analyse la faisabilité de l'opération :
   - crédit suffisant ou crédit relais conforme,
   - autorisation temporaire de transaction (étape 3) valide,
   - analyse des paramètres de profil mémorisés dans la mémoire permanente et modifications éventuelles du montant de la transaction ou invalidation (réduction, âge minimum...).
11/ Si l'étape 10 est satisfaisante, le micro-boîtier et la borne échangent les données b) c) d). A défaut d'étape 10 satisfaisante, la transaction est abandonnée.
12/ la transaction est réalisée :
   - débit de la puce amovible de l'acheteur,
   - crédit du même montant de la mémoire de la borne du commerçant,
   - mémorisation des données c) et d) dans une mémoire de la borne du commerçant
   - mémorisation éventuelle de données d) dans une mémoire de la puce permanente de la carte à puces.

### Si le paiement est réalisé avec contact :

5'/ le commerçant introduit le prix à payer sur le clavier de la borne 12,
6'/ le client possesseur de la carte à puces introduit cette dernière dans le lecteur de carte attaché à la borne 12,
7'/ le microprocesseur analyse la validité de l'autorisation temporaire (étape3). Si la validation est satisfaisante, on revient à l'étape 10, sinon la transaction est abandonnée.

Cinq catégories d'acteurs sont concernées dans une transaction par la mise en oeuvre de l'invention :
- L'émetteur de cartes » fournit à la population concernée :
   les micro-boîtiers
   les cartes pourvues de leur seule puce permanente
- L'émetteur de puces amovible : la banque centrale ou toute banque habilitée
- L'utilisateur, possesseur du micro-boîtier.
- L'utilisateur de transactions : les commerçants ou prestataires équipés de moyens de connexion (12', 12" , 12"' , 12"")
- Le collecteur : un ou plusieurs établissements bancaires ou financiers locaux, appelé(s) à créditer les commerçants quotidiennement.

Selon un mode de réalisation particulier, deux micro-boîtiers, un donneur et un receveur, pourvus de leur carte à puces, peuvent également échanger entre eux de faibles sommes d'argent. Pour effectuer les échanges de données permettant le transfert d'argent de l'un vers l'autre, les deux boîtiers doivent être à proximité et se faire face si le moyen de communication utilisé est l'infrarouge. Une telle transaction doit répondre aux critères de sécurité, d'anonymat et de responsabilisation du receveur pour dissuader la fraude.

En supposant que le premier micro-boîtier doive transférer une somme de 3 € vers le second, le possesseur du micro-boîtier donneur introduit le montant du transfert sur le clavier dudit micro-boîtier, et presse la touche transfert. Le possesseur du micro-boîtier receveur à proximité doit alors presser sur la touche « activer ».
- Le premier micro-boîtier débite 3 € de la mémoire sécurisée de la puce permanente logée dans le micro-boîtier, et transmet ce montant ainsi que le numéro de série de la puce amovible qui a permis de créditer la mémoire sécurisée vers le micro-boîtier receveur qui est en état d'attente.
- Le montant de 3 € s'affiche à l'écran du micro-boîtier receveur puis est crédité dans une mémoire sécurisée de la puce permanente de la carte à puces logée dans le boîtier receveur, cette mémoire spécifique étant dédiée aux sommes reçues d'un autre micro-boîtier selon la procédure qui vient d'être décrite. De plus, le numéro de série de la puce amovible logée dans le micro-boîtier émetteur est également mémorisé dans cette même mémoire, lequel numéro de série est associé à la transaction qui vient d'être réalisée.

Pour des raison de sécurité, cette procédure ne peut être réitérée qu'un faible nombre de fois (3 à 5 par exemple) et ne peut porter que sur de faibles montants. Aux premiers paiements que va effectuer le possesseur de la carte à puces logée dans le micro-boîtier qui a reçu une somme d'argent venant d'un autre carte à puces via les échanges entre deux micro-boîtiers, c'est le (ou les) montant mémorisé dans la mémoire permanente qui va être dépensé en priorité.

La mémoire permanente qui permet de mémoriser des sommes d'argent venant d'une autre carte à puces via un micro-boîtier, peut enregistrer plusieurs transactions tel que décrit plus haut. La mémoire permanente enregistre les paramètres propres à chaque transaction (numéro de série de la puce amovible du donneur et montant de la somme reçue, et pour responsabiliser le receveur, son code d'identification), lesquels paramètres seront transmis au système informatique 14 pour toute opération de paiement, ceci aussi longtemps que le montant enregistré dans la mémoire permanente ne sera pas épuisée.

De nombreuses variantes de l'invention peuvent être envisagées. Ainsi, la puce amovible peut être représentative d'un prêt, la puce permanente mémorisant alors les modalités de gestion du prêt dont elle génère automatiquement les remboursements, transmis lors d'un connexion avec un moyen de connexion 12.

A noter que, selon une variante, si le crédit disponible mémorisé dans la mémoire permanente s'avère insuffisant pour effectuer un paiement, on peut envisager que le microprocesseur procède néanmoins à ce paiement dans la limite d'un crédit relais autorisé dont le montant prédéfini est mémorisé dans la mémoire permanente, ce crédit relais étant remboursé dès la mise en place d'une nouvelle puce amovible.

Enfin, on imagine très bien que la carte à puces intègre, outre l'évidement destiné à la puce amovible, un deuxième, voire un troisième évidement destinés à recevoir d'autres puces contenant par exemple des valeurs-argent spécifiques, type tickets restaurant, des jeux, des paramètres d'accès à des lieux sécurisés, etc.. Dans cette hypothèse, le micro-boîtier doit être pourvu des connecteurs correspondants.

Le système qui vient d'être décrit est un porte-monnaie électronique à vocation universelle, qui concerne cent pour cent d'une population, bancarisée ou non, sans obligation de disposer d'une carte bancaire pour le rechargement, ni même d'être titulaire d'un compte bancaire. Il peut réaliser toutes les opérations et présente tous les avantages permis par la monnaie fiduciaire (paiement anonyme, thésaurisation possible) tout en apportant aux institutions bancaires des avantages importants tels que l'émission de monnaie centralisée et sécurisée, et le suivi des flux automatisé.

Une autre application des concepts de l'invention consiste à lutter contre la contrefaçon. Pour ce faire, une puce d'authentification est solidarisée à tout objet de luxe et onéreux (montre, bagagerie...) selon tout moyen connu, la puce d'authentification pouvant être désolidarisée de l'objet de luxe par le vendeur lors de la vente.

La puce d'authentification est en fait une puce amovible qui, lors d'une vérification, doit être insérée dans un évidement de la carte à puces 2. Comme précédemment, la puce est exploitée via un micro-boîtier 6, grâce à au moins un algorithme mémorisé dans la puce permanente. Elle intègre deux zones mémoire. La première zone mémorise un code d'identification et un numéro de série unique de l'article. Exemple : « bagage modèle x couleur y n° de série z ». Le vendeur de l'objet de luxe dispose d'un appareil comprenant des moyens capables d'inscrire, une seule fois et au moment de la vente, dans la seconde zone de mémoire les paramètres de la vente (date, nom du vendeur, montant, conditions et preuve de la garantie, éventuellement nom du futur possesseur)...

L'authentification de l'article vendu est réalisée après introduction de la carte à puces munie de la puce d'authentification dans un micro-boîtier. Le microprocesseur de la puce permanente, grâce à au moins un algorithme mémorisé dans sa mémoire EPROM, est capable de lire les informations contenues dans les mémoires de la puce et d'en vérifier la cohérence.

## Revendications

1. Système de carte à puces sécurisé comprenant une carte bi-puce (1) comportant une première puce (2) constituée essentiellement d'un microprocesseur et d'une mémoire programmable sécurisée dite puce permanente et une deuxième puce (3) amovible incluant essentiellement une mémoire à lecture unique contenant un montant de crédit prédéterminé à la disposition de l'utilisateur, et un micro-boîtier (6) adapté pour y insérer ladite carte bi-puce, ledit micro-boîtier comprenant des moyens de communication (11) pour communiquer avec une unité de transaction extérieure, notamment une borne extérieure (12' , 12", 12"' , 12"" ) destinée à enregistrer une transaction et des moyens d'interconnexion pour connecter lesdites première et deuxième puces entre elles de manière à décrémenter ladite mémoire programmable sécurisée du montant de la transaction effectuée;
ledit système étant **caractérisé en ce que** ladite mémoire à lecture unique de la puce amovible contient, outre ledit montant de crédit prédéterminé, un numéro de série unique attribué par la banque centrale à l'instar d'un billet de banque, ledit montant de crédit et ledit numéro unique étant enregistrés dans ladite mémoire programmable sécurisée par lesdits moyens d'interconnexion lorsque ladite carte bi-puce est insérée pour la première fois dans ledit micro-boîtier.

2. Système selon la revendication 1, dans lequel ledit numéro de série unique est communiqué avec un code du type « nouvelle puce activée » à ladite borne extérieure (12' , 12", 12"', 12"") par les moyens de communication (11) dudit micro-boîtier (6) à l'occasion de la première transaction intervenant après la mise en place d'une nouvelle puce amovible.

3. Système selon la revendication 2, dans lequel ledit numéro de série de ladite puce amovible (3) est transmis vers ladite borne extérieure (12' , 12" , 12"' , 12"") avec un code du type « puce épuisée » lorsque le montant de crédit prédéterminé enregistré dans ladite mémoire programmable sécurisée a été épuisé.

4. Système selon la revendication 3, comprenant en outre un système informatique centralisé (14) connecté à ladite borne extérieure (12' , 12" , 12"' , 12""), cette dernière transmettant audit système informatique centralisé le code du type « nouvelle puce activée » à l'occasion de la première transaction intervenant après la mise en place d'une nouvelle puce amovible, et le code du type « puce épuisée » lorsque le montant de crédit prédéterminé a été épuisé, lesdites informations permettant audit système centralisé de suivre et de gérer les flux monétaires.

5. Système selon l'une des revendications 1 à 4, dans lequel ladite borne extérieure est un ordinateur personnel (12"') relié par le réseau Internet à un site marchand (21) de manière à permettre à l'utilisateur dudit ordinateur personnel de pouvoir effectuer des transactions sécurisées avec ledit site marchand en utilisant ledit montant de crédit.

6. Système selon l'une des revendications 1 à 4, dans lequel ladite borne extérieure est un téléphone (12"") relié par le réseau téléphonique commuté à un site marchand (21) de manière à permettre à l'utilisateur dudit téléphone de pouvoir effectuer des transactions sécurisées avec ledit site marchand en utilisant ledit montant de crédit.

7. Système selon la revendication 5 ou 6, dans lequel le microprocesseur de ladite puce permanente (2) utilise au moins un algorithme pour déterminer un numéro d'autorisation spécifique à une transaction en fonction de différents paramètres tels que les coordonnées de l'acheteur, le montant de la transaction, le numéro de série de la puce amovible.

8. Système selon la revendication 7, dans lequel ledit système marchand (21) dispose du même algorithme que celui dudit microprocesseur de la puce permanente (2) de manière à déterminer un numéro d'autorisation permettant de vérifier la cohérence avec celui qui a été communiqué par ladite carte (1).

9. Système selon la revendication 8, dans lequel la validation de la transaction est réalisée par introduction au moyen du clavier dudit ordinateur personnel (12"') ou dudit téléphone (12"") du numéro de série de ladite puce amovible (3) et d'un numéro d'autorisation calculé par le microprocesseur de ladite puce permanente (2), lesdits numéros étant affichés sur l'écran (9) dudit micro-boîtier (6).

10. Système selon l'une des revendications 1 à 9, dans lequel le microprocesseur de ladite puce permanente (2) vérifie séquentiellement et avant toute transaction que ladite puce amovible (3) est toujours présente dans ladite carte bi-puce (1).

11. Système selon l'une des revendications 1 à 10, dans lequel ladite borne (12' , 12" , 12"' , 12"") intègre un lecteur de carte à puce (16, 16'), ce qui permet d'assurer la transaction par contact en introduisant la carte à puces (1) dans ledit lecteur en cas de défaillance dudit micro-boîtier.

12. Système selon la revendication 11, dans lequel ladite puce amovible (3) est positionnée selon une symétrie centrale par rapport à ladite puce permanente (2) afin de permettre la lecture successive d'une puce puis de l'autre, par introduction, retrait, rotation, et réintroduction de la carte à puces dans ledit lecteur (16, 16').

13. Système selon la revendication 1, dans lequel ladite unité extérieure est un second micro-boîtier dans lequel est insérée une seconde carte bi-puce, la transaction consistant à débiter le montant de crédit de la mémoire sécurisée de la puce permanente de la carte insérée dans le premier micro-boîtier et à transmettre ledit montant ainsi que le numéro de série de la puce amovible vers le second micro-boîtier, ce dernier créditant ledit montant dans la mémoire sécurisée de la puce permanente de ladite seconde carte et enregistrant le numéro de série de la puce amovible de ladite première carte.

## Claims

1. Chip card secured system including a two chip card (1) housing a first chip (2) composed mainly of a microprocessor and of a secured programmable memory called permanent chip and a second chip (3) which is removable and includes mainly a read once memory in which is stored a preset credit amount at the disposal of the user, and a hand held terminal (6) suited for insertion of the said two chip card, the said hand held terminal containing communication means (11) in order to communicate with a remote transaction unit, in particular an external terminal (12', 12" , 12"' , 12"") that records a transaction and interconnection means so as to connect the said first and second chip together in order to decrement the said secured programmable memory with the amount of the processed transaction;
the said system being **characterized by** the fact that the said read once memory of the removable chip contains, in addition to the said preset credit amount, a unique serial number allocated by the Central Bank like a bank note, the said credit amount and the said unique number being stored in the said secured programmable memory through the said interconnection means when the said two chip card is inserted for the first time in the said hand held terminal.

2. System according to claim 1, in which the said unique serial number is communicated with a code such as "new activated chip" to the said external terminal (12', 12" , 12"' , 12"") through communication means (11) of the said hand held terminal (6) during the first
transaction occurring after the installation of a new removable chip.

3. System according to the claim 2, in which the said serial number of the said removable chip (3) is transmitted to the said external terminal (12', 12", 12"', 12"") with a code such as "chip used up" when the preset credit amount recorded in the said secured programmable memory is used up.

4. System according to the claim 3, including in addition a central computer system (14) connected to the said external terminal (12', 12" , 12"' , 12""), the later transmitting to the said centralized computer system the code such as "new chip activated" during the first transaction happening after the installation of a new removable chip, and the code such as "chip used up" when the amount of preset credit as been used up, the said pieces of information allowing the said centralized system to monitor and manage the money flows.

5. System according to claims 1 to 4, in which the said external terminal is a personal computer (12"') linked through the Internet network to a sales site (21) in order to allow the user of the said personal computer to process secured transactions with the said sales site using the said credit amount.

6. System according to one of the claims 1 to 4, in which the said external terminal is a phone set (12"") linked through the switched telephone network to a sales site (21) in order to allow the user of the said telephone to make secured transactions with the said sales site using the said credit amount.

7. System according to claim 5 or 6, in which the microprocessor of the said permanent chip (2) uses at least one algorithm to define an authorization number dedicated to one transaction as a function of several parameters such as the contacts numbers of the buyer, the transaction amount, the serial number of the removable chip.

8. System according to claim 7, in which the said sales system (21) is fitted with the same algorithm as the one of the said microprocessor of the permanent chip (2) in order to define an authorization number allowing the checking of the coherence with the one that has been communicated by the said card (1).

9. System according to claim 8, in which the validation of the transaction is performed typing on the keyboard of the said personal computer (12"') or of the said telephone (12"") the serial number of the said removable chip (3) and an authorization number computed by the microprocessor of the said permanent chip (2), the said numbers being displayed on the screen (9) of the said hand held terminal (6).

10. System according to the claims 1 to 9, in which the microprocessor of the said permanent chip (2) checks before any transaction that the said removable chip (3) is still present in the said two chip card (1).

11. System according to one of the claims 1 to 10, in which the said terminal (12' , 12" , 12"' , 12"") includes a chip card reading device (16,16'), that allows to make the transaction by contact by introduction of the chip card (1) in the said reading device in case of failure of the said hand held terminal.

12. System according to the claim 11, in which the said removable chip (3) is positioned according to a central symmetry compared to the said permanent chip (2) in order to allow the successive reading of one chip and then the other one, by introduction, removal, rotation, and reinsertion of the chip card in the said reading device (16,16').

13. System according to the claim 1, in which the said external unit is a second hand held terminal in which is inserted a second two chip card, the transaction consisting in the debit the credit amount of the secured memory of the permanent chip of the card inserted in the first hand held terminal and in the transmission of the said amount and the serial number of the removable chip to the second hand held terminal, the later crediting the said amount in the secured memory of the permanent chip of the said second card and recording the serial number of the removable chip of the said first card.

## Patentansprüche

1. Gesichertes Chipkartensystem, das sich zusammensetzt aus:
einem Doppel-Mikrochip (1), dessen erster, permanenter Chip (2) im wesentlichen aus einem Mikroprozessor und einem programmierbaren, gesicherten Speicher besteht, und dessen zweiter, herausnehmbarer Chip (3) im wesentlichen aus einem Speicher mit einer einmaligen Lesefunktion besteht und der eine vorher festgelegte, dem Benutzer zur Verfügung stehende Gutschrift enthält, sowie aus einem Mikrochip-Gehäuse (6), in das die Doppel-Mikrochipkarte eingeführt werden kann. In das Mikrochip-Gehäuse sind Kommunikationstools (11) für die Kommunikation mit einer externen Transaktionseinheit, insbesondere einer externen Einheit (12', 12" , 12''', 12'''') zur Speicherung einer Transaktion integriert sowie Verbindungstools zur Vernetzung des ersten und zweiten Chips, so dass der Betrag der jeweiligen Transaktion vom oben genannten programmierbaren und gesicherten Speicher abgezogen werden kann;
dieses System ist dadurch charakterisiert, dass der einmalige Lesespeicher des herausnehmbaren Chips ausser der vorher festgelegten Gutschrift eine einmalige Seriennummer enthält, die - genau wie bei einem Geldschein - von der Zentralbank vergeben wird, wobei die Gutschrift und die einmalige Nummer im programmierbaren Speicher, der durch die oben genannten Verbindungstools gesichert ist, abgespeichert werden, wenn die Doppel-Mikrochipkarte zum ersten Mal in das Mikrogehäuse eingeführt wird.

2. System gemäss Anspruch 1, in dem die einmalige Serienummer mit einem Code des Typs "neuer Mikrochip aktiviert" der externen Einheit (12', 12", 12"', 12"") über die Kommunikationstools (11) des Mikro-Gehäuses (6) bei der ersten Transaktion nach dem Einsetzen eines neuen, herausnehmbaren Chips mitgeteilt wird.

3. System gemäss Anspruch 2, in dem die Seriennummer des herausnehmbaren Mikrochips (3) an die externe Einheit (12', 12" , 12"' , 12"") mit einem Code des Typs "Mikrochip leer" übertragen wird, wenn der vorher festgelegte und in den programmierbaren und gesicherten Speicher eingegebene Kredit verbraucht wurde.

4. System gemäss Anspruch 3, das des Weiteren ein zentrales Informatiksystem (14) enthält, das mit der externen Einheit (12' , 12", 12"' , 12"") verbunden ist. Diese übermittelt dem zentralen Informatiksystem den Code vom Typ "neuer Mikrochip aktiviert" bei der ersten Transaktion, die nach dem Einsetzen eines neuen, herausnehmbaren Mikrochips erfolgt, und den Code vom Typ "Mikrochip leer", wenn der vorher festgelegte Kredit verbraucht wurde, wobei das zentrale System aufgrund der genannten Informationen in der Lage ist, die Transaktionen zu verfolgen und zu verwalten.

5. System gemäss einem der Ansprüche 1 bis 4, dessen externe Einheit ein PC ist (12"'), der über das Internet mit einem Online-Vertrieb (21) verbunden ist, so dass der Benutzer des PC's gesicherte Transaktionen unter Verwendung des Guthabens mit dem Händler vornehmen kann.

6. System gemäss einem der Ansprüche 1 bis 4, dessen externe Einheit ein Telefon ist (12""), das durch das geschaltete Telefonnetz mit einem Online-Vertrieb (21) verbunden ist, so dass der Benutzer des Telefons gesicherte Transaktionen unter Benutzung des Guthabens mit dem Händler vornehmen kann.

7. System gemäss Anspruch 5 oder 6, in welchem der Mikroprozessor des permanenten Mikrochips (2) mindestens einen Algorithmus verwendet, um eine spezifische Nummer zur Genehmigung einer bestimmten Transaktion unter Berücksichtigung verschiedener Parameter wie die Kontaktdaten des Käufers, die Höhe der Transaktion, die Seriennummer des herausnehmbaren Mikrochips festzulegen.

8. System gemäss Anspruch 7, bei welchem das System des Händlers (21) über den gleichen Algorithmus verfügt wie der Mikroprozessor des permanenten Mikrochips (2), um eine Autorisierungsnummer festlegen, um die Übereinstimmung mit der Nummer zu prüfen, die über die Karte (1) mitgeteilt wurde.

9. System gemäss Anspruch 8, in welchem die Freigabe der Transaktion über die Eingabe der Seriennummer des herausnehmbaren Mikrochips (3) mittels der Tastatur des PC's (12"') oder des Telefons (12"") und über eine Autorisierungsnummer erfolgt, die vom Mikroprozessor des permanenten Mikrochips (2) berechnet wird, wobei die Ziffern auf dem Bildschirm (9) des Mikrogehäuses (6) angezeigt werden.

10. System gemäss einem der Ansprüche 1 bis 9, in welchem der Mikroprozessor des permanenten Mikrochips (2) in regelmässigen Abständen und vor jeder Transaktion prüft, ob der herausnehmbare Mikrochip (3) in der Doppel-Mikrochipkarte (1) vorhanden ist.

11. System gemäss einem der Ansprüche 1 bis 10 mit einem in die Einheit (12' , 12" , 12"' , 12"") integrierten Kartenlesegerät für Mikrochips (16, 16'), so dass die Transaktion über den Kontakt erfolgen kann, in dem die Mikrochipkarte (1) in das Lesegerät eingeführt wird, falls das Mikrogehäuse defekt ist.

12. System gemäss Anspruch 11, in welchem der herausnehmbare Mikrochip (3) gemäss einer zentralen Symmetrie im Hinblick auf den permanenten Mikrochip (2) positioniert wird, um das sukzessive Ablesen erst des einen, dann des anderen Mikrochips durch Einführen, Herausziehen, Drehen und Wiedereinführen der Chipkarte in das Lesegerät (16, 16') zu ermöglichen.

13. System gemäss Anspruch 1, in welchem die externe Einheit ein zweites Mikrogehäuse ist, in welches eine zweite Doppel-Mikrochipkarte eingeführt wird. Die Transaktion besteht darin, das Guthaben vom gesicherten Speicher des permanenten Mikrochips der Karte, die in das erste Mikrogehäuse eingeführt worden war, abzubuchen sowie den Betrag und die Seriennummer des herausnehmbaren Mikrochips an das zweite Mikrogehäuse weiterzuleiten, wobei letzteres den Betrag im gesicherten Speicher des permanenten Mikrochips der zweiten Karte gut schreibt und die Seriennummer des herausnehmbaren Mikrochips der ersten Karte speichert.
